# EUROPÄISCHE PATENTANMELDUNG

(11) **EP 1 936 218 A2**
(43) Veröffentlichungstag der Anmeldung: **25.06.2008**
(21) Anmeldenummer: 07021694.0
(22) Anmeldetag: 08.11.2007
(51) Int. Cl.: F16D 7/02, F16D 43/21

(54) **Drehmomentbegrenzer und Montageverfahren für einen Drehmomentbegrenzer**

(30) Priorität: 30.11.2006 US 861948 P
(71) Anmelder: LuK Lamellen und Kupplungsbau Beteiligungs KG, 77815 Bühl (DE)
(72) Erfinder: Avins, David, Burbank, Ohio 44214 (US); Graf, Mark, Creston, OH 42217 (US)

(57) **Zusammenfassung**

Die vorliegende Erfindung umfasst allgemein gesagt einen Drehmomentbegrenzer (100), einschliesslich eines abgedichteten Behälters (112) mit einer Dämpferanordnung (114) und einer Kupplung (102), die dazu eingerichtet ist, von einer Antriebseinheit Drehmoment zu empfangen, und das Drehmoment an die Dämpferanordnung (114) zu übertragen. Die Kupplung (102) wird unabhängig von dem Eingriff des Begrenzers (100) mit der Antriebseinheit vorgespannt. Die Reaktionskraft zwischen dem elastischen Element (108) in der Kupplung (102) und dem Behälter (112) spannt die Kupplung (102) vor. Die Kupplung (102) ist dazu ausgelegt, bei einem festgelegten Drehmomentwert zu schlupfen. Das elastische Element (108) ist dazu eingerichtet, die Kupplung (102) vorzuspannen, so dass die Kupplung (102) bis zu dem festgelegten Drehmomentwert voll im Eingriff bleibt. In einigen Ausführungsformen weist der Begrenzer (100) eine Verbindungsplatte (110) für die Antriebseinheit auf, und die Kupplung (102) ist zwischen der Verbindungsplatte (110) und dem Behälter (112) angeordnet. In einigen Ausführungsformen enthält der Behälter (112) ein Gehäuse, welches mit der Verbindungsplatte (110) verbunden ist, und die Kupplung (102) ist zwischen dem Gehäuse und der Dämpferanordnung (114) angeordnet.

## Beschreibung

### Gebiet der Erfindung

Die Erfindung bezieht sich auf Verbesserungen in Vorrichtungen zur Kraftübertragung zwischen einer drehenden Antriebseinheit (wie z.B. einem Motor eines Kraftfahrzeugs) und einer drehend angetriebenen Einheit (wie z.B. einem Schaltgetriebe in einem Kraftfahrzeug). Insbesondere bezieht sich die Erfindung auf eine Vorrichtung, die zwischen einem Motor und einem Getriebe angeordnet ist und dazu ausgelegt ist, Drehmomentspitzen, die von einem hybriden Benzin-Elektromotor-System ausgehen zu dämpfen. Insbesondere enthält die Vorrichtung eine vorgespannte Kupplung, die dazu ausgelegt ist, auf einem vorbestimmten Drehmomentniveau mit Schlupf zu arbeiten.

### Hintergrund der Erfindung

In bestimmten Fahrzeuganwendungen, insbesondere für Fahrzeuge mit hybriden Benzin-Elektromotor-Systemen, können Drehmomentspitzen, die von dem Motorsystem erzeugt werden, und auf ein Getriebe für ein Fahrzeug übertragen werden, Schäden in dem Getriebe hervorrufen, z.B. Schäden an der Antriebswelle des Getriebes.

Es ist bekannt, eine Drehmomentbegrenzung und -Dämpfung zwischen den oben genannten Motorsystemen und dem Getriebe zur Verfügung zu stellen, z.B. wie in der Japanischen Patentanmeldung 2000196036 beschrieben. Leider kann die Kupplung in diesen Drehmomentbegrenzungs- und Dämpfungsvorrichtungen vor dem Einbau in das Fahrzeug nicht vorgespannt werden. Das bedeutet, zusätzliche Zeit und Kosten müssen aufgewandt werden, um diese Vorrichtungen richtig zu versenden und einzubauen. Insbesondere kann eine Feder, die verwendet wird, um die Kupplung vorzuspannen, nur die Vorspannkraft zur Verfügung stellen, wenn sie in einem Fahrzeug eingebaut ist. Das bedeutet, die Feder drückt gegen das Fahrzeug, in das sie eingebaut ist, um die Vorspannkraft zur Verfügung zu stellen.

Es gibt also seit langem einen Bedarf für eine Drehmomentbegrenzungs- und Dämpfungsvorrichtung, die modular ist, und eine vorgespannte Kupplung enthält, um Schritte zu minimieren, die mit dem Einbau der Vorrichtung in einem Fahrzeug in Zusammenhang stehen.

### Kurze Zusammenfassung der Erfindung

Die vorliegende Erfindung umfasst allgemein gesagt einen Drehmomentbegrenzer, der einem abgedichteten Behälter mit einer Dämpferanordnung aufweist und eine Kupplung, die dazu angeordnet ist, Drehmoment von einer Antriebseinheit zu erhalten, und Drehmoment auf die Dämpferanordnung zu übertragen. Die Kupplung wird unabhängig vom Eingriff des Begrenzers mit der Antriebseinheit gespannt, und die Kupplung ist dazu eingerichtet, bei einem bestimmten Drehmomentwert mit Schlupf zu arbeiten. Der Begrenzer enthält auch ein elastisches Element, welches dazu eingerichtet ist, die Kupplung so vorzuspannen, dass die Kupplung bis zu dem festgelegten Drehmomentwert voll im Eingriff bleibt.

In einigen Ausführungsformen enthält der Begrenzer eine Verbindungsplatte für die Antriebseinheit, die zur Verbindung mit der Antriebseinheit angeordnet ist, und die Kupplung ist zwischen der Verbindungsplatte für die Antriebseinheit und dem Behälter angeordnet. In einigen Ausführungsformen ist die Kupplung eine Trockenkupplung. In einigen Ausführungsformen umfasst der Behälter ein Gehäuse, die Kupplung ist mit dem Gehäuse verbunden, die Kupplung ist so angeordnet, dass sie das Drehmoment der Antriebseinheit auf das Gehäuse überträgt, und das elastische Element ist an dem Gehäuse befestigt.

In einigen Ausführungsformen enthält der Begrenzer eine Verbindungsplatte für die Antriebseinheit, die zur Verbindung mit der Antriebseinheit angeordnet ist, der Behälter weist ein erstes Gehäuse auf, welches mit der Verbindungsplatte der Antriebseinheit verbunden ist, und die Kupplung ist zwischen dem ersten Gehäuse und der Dämpferanordnung angebracht. In einigen Ausführungsformen enthält das abgeschlossene Gehäuse ein Fluid, oder der Behälter enthält ein zweites Gehäuse, und das elastische Element befindet sich im gleitenden Eingriff mit dem zweiten Gehäuse. In einigen Ausführungsformen ist das zweite Gehäuse in Berührung mit dem elastischen Element und das elastische Element spannt die Kupplung als Reaktion auf die Berührung vor. In einigen Ausführungsformen weist der Begrenzer einen Sicherungsring auf, der sich mit dem ersten Gehäuse in Eingriff befindet, und in Berührung mit dem elastischen Element, und das elastische Element spannt die Kupplung als Reaktion auf die Berührung vor.

Die vorliegende Erfindung umfasst allgemein gesagt einen Drehmomentbegrenzer, der eine Verbindungsplatte für Antriebseinheit aufweist, die zur Verbindung mit einer Antriebseinheit angeordnet ist, und um Drehmoment von der Antriebseinheit zu übertragen, einen verschlossenen Behälter mit einer Dämpferanordnung, und eine Kupplung in einem Drehmomentübertragungspfad zwischen der Verbindungsplatte für die Antriebseinheit und dem Dämpfer. Eine Reaktionskraft zwischen einem elastischen Element in der Kupplung und dem Behälter spannt die Kupplung vor, und die Kupplung wird dazu angeordnet, bei einem bestimmten Drehmomentwert mit Schlupf zu arbeiten. In einigen Ausführungsformen ist die Kupplung zwischen der Verbindungsplatte der Antriebseinheit und dem geschlossenen Behälter angeordnet. In einigen Ausführungsformen umfasst der Behälter weiterhin ein Gehäuse und die Kupplung ist zwischen dem Gehäuse und der Dämpferanordnung angeordnet.

Die vorliegende Erfindung umfasst weiterhin allgemein ein Verfahren, um einen Drehmomentbegrenzer zu montieren, welches die Schritte, Aufstecken eines elastischen Elements auf einem ersten Abschnitt eines Dämpfergehäuses, Aufstecken einer Kupplungs- und Dämpferanordnung auf das elastische Element, und in Eingriff bringen des ersten Teils mit dem zweiten Teil des Dämpfergehäuses umfasst, so dass das elastische Element die Kupplung vorspannt, und die Kupplung bei einem vorbestimmten Drehmomentwert mit Schlupf arbeitet. In einigen Ausführungsformen enthält das Verfahren das Verschweissen des ersten Teils und des zweiten Teils, um das Gehäuse abzudichten.

Die vorliegende Erfindung umfasst allgemein ein Verfahren zur Montage eines Drehmomentbegrenzers, das die Schritte Aufstecken einer Anordnung aus Kupplung- und Dämpfer auf einen ersten Abschnitt eines Dämpfergehäuses umfasst, Aufstecken eines elastischen Element auf die Anordnung aus Kupplung und Dämpfer, und axiales Festlegen des elastischen Elements an dem ersten Abschnitt, so dass das elastische Element die Kupplung vorspannt, und die Kupplung bei einem bestimmten Drehmomentwert mit Schlupf arbeitet. Nach einigen Gesichtspunkten enthält das Verfahren das in Eingriff bringen des ersten Abschnitts mit einem zweiten Abschnitt des Dämpfergehäuses und das Verschweissen des ersten und zweiten Abschnitts, um den Behälter abzudichten. In einigen Ausführungsformen enthält das axiale Festlegen des elastischen Elements an dem ersten Abschnitt das in Eingriff bringen eines Sicherungsrings mit dem ersten Abschnitt und dem elastischen Element.

Allgemein ist es ein Ziel der vorliegenden Erfindung, eine vorab montierte modulare Vorrichtung zur Verfügung zu stellen, um Drehmomentspitzen zu begrenzen, die von einer Antriebseinheit an ein Getriebe übertragen werden.

Es ist ein anderes Ziel der vorliegenden Erfindung, eine Vorrichtung zur Drehmomentbegrenzung zur Verfügung zu stellen, die einen Flüssigkeitsdämpfer verwendet.

Es ist ein weiteres Ziel der vorliegenden Erfindung, eine Vorrichtung zur Drehmomentübertragung zur Verfügung zu stellen, die eine Trockenkupplung oder eine Nasskupplung verwendet.

Dieses und andere Ziele und Vorzüge der vorliegenden Erfindung werden aus der folgenden Beschreibung bevorzugter Ausführungsformen der Erfindung und aus den beigefügten Zeichnungen und Ansprüchen leicht verständlich.

### Kurze Beschreibung der Zeichnungen

Die Art und Weise des Betriebs der vorliegenden Erfindung wird nun in der nun folgenden ausführlichen Beschreibung der Erfindung näher beschrieben, insbesondere wenn sie mit den beigefügten Zeichnungsfiguren betrachtet wird:
Fig. 1 ist eine geschnittene Teilansicht eines Drehmomentbegrenzers gemäss der vorliegenden Erfindung mit einer Trockenkupplung;
Fig. 2 ist eine teilweise geschnittene Ansicht eines Drehmomentbegrenzers gemäss der vorliegenden Erfindung mit einer Trockenkupplung;
Fig. 3 ist eine teilweise Schnittansicht eines Drehmomentbegrenzers gemäss der vorliegenden Erfindung mit einer Nasskupplung; und
Fig. 4 ist eine teilweise Schnittansicht eines Drehmomentbegrenzers mit einer Nasskupplung.

### Ausführliche Beschreibung der Erfindung

Einleitend ist zu sagen, dass die gleichen Bezugszeichen in verschiedenen Zeichnungsansichten identische Bauteile oder Bauteile mit einer ähnlichen Funktion der Erfindung kennzeichnen. Obgleich die vorliegende Erfindung mit Bezug darauf beschrieben wird, was derzeit bevorzugte Ausführungsformen sind, ist jedoch festzuhalten, dass die beanspruchte Erfindung nicht auf die offengelegten Ausführungsformen beschränkt ist.

Weiterhin, ist festzuhalten dass diese Erfindung nicht auf bestimmte Methoden, Werkstoffe, und Modifikationen beschränkt ist, und deshalb natürlich variieren kann. Es ist auch festzuhalten, dass die hier verwendete Terminologie nur dem Zweck dient, einzelne Aspekte der Erfindung zu beschreiben, und nicht dazu gedacht ist, den Schutzumfang der vorliegenden Erfindung einzuschränken, der nur durch den Schutzumfang der beigefügten Ansprüche beschränkt ist.

Wenn es nicht anders vermerkt ist, haben alle hier verwendete technische und wissenschaftliche Ausdrücke die gleiche Bedeutung wie sie einem Fachmann im Bereich der Erfindung geläufig sind. Obwohl jegliche Verfahren, Vorrichtungen, oder Werkstoffe, die ähnlich oder gleichwertig zu den hier beschrieben sind in der Ausführung oder bei Versuchen der Erfindung verwendet werden können, werden die bevorzugten Verfahren, Vorrichtungen, und Werkstoffe nun beschrieben.

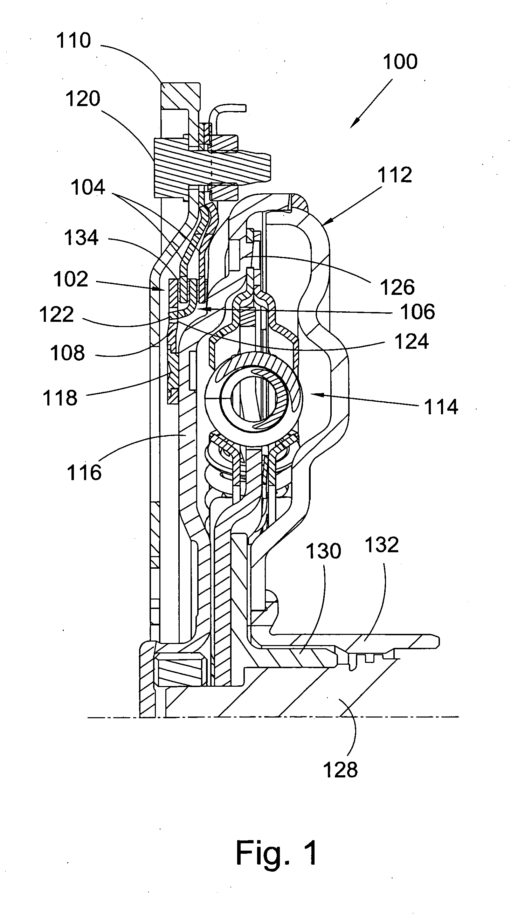

Fig. 1 ist eine teilweise Schnittansicht des Drehmomentbegrenzers 100 mit der Kupplung 102. In einigen Ausführungsformen ist die Kupplung 102 eine Trockenkupplung. Die Kupplung 102 enthält Antriebsplatten 104, eine Antriebsplatte 106 und ein elastisches Element 108. Antriebsplatten 104 werden mit der Verbindungsplatte für die Antriebseinheit, oder Flexplatte 110 verbunden. Obwohl eine spezielle Flexplatten-Anordnung in der Figur gezeigt wird, ist festzuhalten, dass jedes Mittel in der Technik verwendet kann, um den Begrenzer 100 mit einer Antriebseinheit zu verbinden. Der Begrenzer 100 enthält auch einen verschlossenen Behälter 112, der eine Dämpferanordnung 114 und ein Fluid (nicht gezeigt) wie z.B. Kühlungsöl enthält. Obwohl zwei Antriebsplatten 104 und eine Antriebsplatte 106 in der Figur gezeigt werden, ist anzumerken dass andere Anzahlen von Antriebsplatten 104 und 106 mit dem Begrenzer 100 verwendet werden können. Die Flexplatte 100 ist zur Verbindung mit einer Antriebseinheit (nicht gezeigt) angeordnet, und um Drehmoment von der Antriebseinheit zu empfangen und zu übertragen. Die Kupplung 102 ist dazu angeordnet, um Drehmoment von der Antriebseinheit zu empfangen, und das Drehmoment auf die Dämpferanordnung zu übertragen.

Die Kupplung 102 ist unabhängig von Eingriff des Begrenzers 100 mit der Antriebseinheit vorgespannt, z.B. unabhängig von der Verbindung der Flexplatte 110 mit der Antriebseinheit, und ist dazu angeordnet um bei einem bestimmten Drehmomentwert mit Schlupf zu arbeiten. Zum Beispiel beginnt die Kupplung zu schlupfen, wenn das Antriebsmoment, welches von der Flexplatte übertragen wird, den vorgeschriebenen Wert erreicht. Unter vorgespannt ist zu verstehen dass eine Kraft, z.B. eine axiale Kraft auf die Kupplung aufgebracht wird, so dass die Kupplung sich voll im Eingriff befindet und Drehmoment von der Flexplatte überträgt. Wenn das von der Kupplung aufgenommene Drehmoment den vorgeschriebenen Wert erreicht, dann sind die mit dem Drehmoment verbundenen Kräfte grösser als die Last auf der Kupplung, und die Kupplung entwickelt Schlupf. Zum Beispiel entwickelt die Kupplung 102 Schlupf, wenn Drehmomentspitzen von der Antriebseinheit den spezifizierten Wert übersteigen. Das elastische Element 108 bringt eine Vorspannung auf die Kupplung auf, und in der Technik bekannte Mittel, z.B. eine Tellerfeder, kann als Element 108 verwendet werden. Das Element 108 ist mit dem Gehäuse 116 des Behälters durch beliebige in der Technik bekannte Mittel verbunden, z.B. durch extrudierte Nieten 118. Das Element 108 bringt die Last auf die Kupplung als Reaktion auf die Verbindung mit dem Gehäuse auf, unabhängig von jeder Verbindung des Begrenzers 100 mit einer Antriebseinheit. Anders gesagt, eine Reaktionskraft zwischen dem elastischen Element und dem Behälter spannt die Kupplung vor. Damit hat die Belastung der Kupplung durch das Element 108 nichts zu tun, und ist nicht abhängig von einer schliesslichen Verbindung der Anordnung mit einer Antriebseinheit. Damit ist die Anordnung 100 eine vorgespannte modulare Einheit, die keine weitere Bewegung von Teilen erfordert, um einen vorgespannten Zustand der Kupplung zu erreichen, was den schliesslichen Einbau des Begrenzers 100 in einen Antriebsstrang sehr erleichtert.

Befestigungsmittel 120 verbinden die Flexplatte mit den Antriebsplatten 104. In einigen Ausführungsformen sind die Befestigungsmittel Schrauben, obwohl festzuhalten ist, dass jedes in der Technik bekannte Befestigungsmittel als Befestigungsmittel 120 verwendet werden kann. Der Begrenzer 100 ist nicht auf irgendeine Anzahl von Befestigungsmitteln 120 beschränkt. Nach einigen Gesichtspunkten werden vier bis sechs Befestigungsmittel verwendet. Damit übertragen die Befestigungsmittel 120 das Drehmoment der Antriebseinheit von der Flexplatte auf die Antriebsplatten. Die Platte 106 ist drehfest mit dem Element 108 durch freistehende Verlängerungen 122 auf der Platte und Öffnungen 124 in dem Element verbunden. Mit drehfest verbunden oder befestigt, ist gemeint dass die Platte und das Element so verbunden sind, dass die beiden Komponenten gemeinsam rotieren, dies bedeutet, die beiden Komponenten sind mit Bezug auf die Drehung festgelegt. Das drehfeste Verbinden von zwei Komponenten begrenzt nicht zwangsweise ihre relative Bewegung in anderen Richtungen. Zum Beispiel ist es für zwei Komponenten, die drehfest verbunden sind, möglich, eine axiale Bewegungsfreiheit relativ zu einander über eine Keilverzahnung aufzuweisen. Jedoch ist festzuhalten, dass eine drehfeste Verbindung nicht voraussetzt, dass eine Bewegung in anderen Richtungen zwingend vorhanden ist. Zum Beispiel können zwei Komponenten, die drehfest verbunden sind, axial aneinander festgelegt sein. Die obige Beschreibung der drehfesten Verbindung ist auf die nun folgende Erklärung anwendbar. Jedoch kann jedes in der Technik bekannte Mittel verwendet werden, um die Platte und das Element zu verbinden.

Die Kupplung 102 überträgt das Antriebsmoment auf das Gehäuse 116, welches mit dem Dämpfer durch ein beliebiges in der Technik bekanntes Mittel, z.B. extrudierte Nieten 126, verbunden ist. Der Dämpfer ist zur drehfesten Verbindung mit der Eingangswelle 128 eines Getriebes (nicht gezeigt) durch beliebige in der Technik bekannte Mittel ausgelegt, z.B. eine Nabe 130 und eine Pumpennabe 132. Damit ist ein Drehmomentpfad von der Antriebseinheit auf das Getriebe durch den Begrenzer 100 hergestellt. Der Drehmomentpfad weist eine Drehmomentbegrenzung durch den Schlupf der Kupplung 102 auf, und eine Dämpfung durch den Betrieb des Dämpfers 114.

In einigen Ausführungsformen ist Reibmaterial 134 axial zwischen den Antriebsplatten, dem Element 108, und/oder dem Gehäuse 116 angebracht. Die Kupplung 102 ist nicht auf irgendeine Art oder Anordnung von Reibmaterialien beschränkt. In einigen Ausführungsformen sind Reibmaterialien fest an den Antriebsplatten angebracht, dem Element 108 und/oder dem Gehäuse 116. In einigen Ausführungsformen sind Kupplungsplatten axial zwischen den Antriebsplatten, dem Element 108, und/oder dem Gehäuse 116 angebracht. In einigen Ausführungsformen wird kein Reibmaterial verwendet, oder ein Rostschutzmaterial, wie z.B. Fett, wird an den Antriebsplatten, dem Element 108, und/oder dem Gehäuse 116 angebracht.

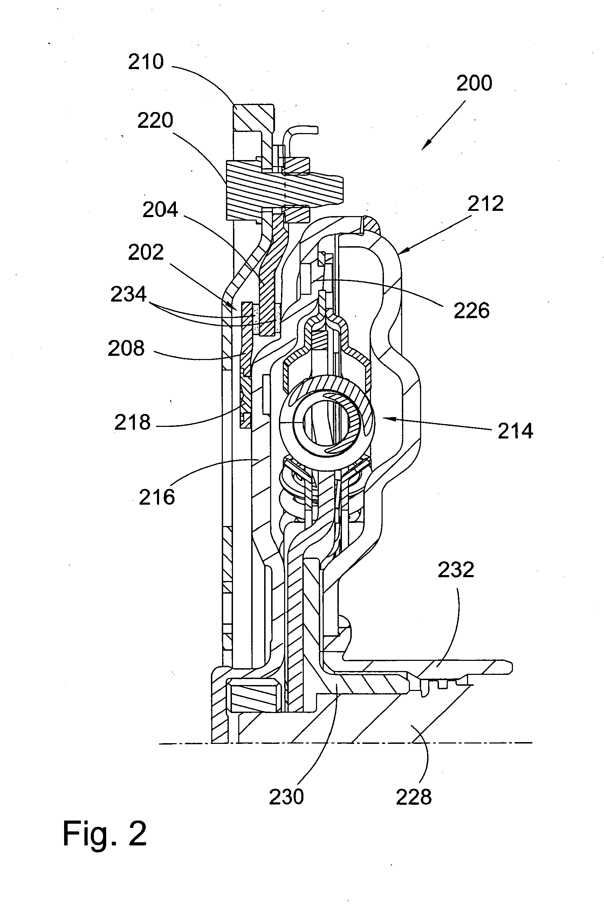

Fig. 2 ist eine teilweise Querschnittsansicht des Drehmomentbegrenzers 200 gemäss der vorliegenden Erfindung mit der Kupplung 202. Nach einigen Ausführungsformen ist die Kupplung eine Trockenkupplung. Das Folgende ist in Zusammenhang mit den Figuren 1 und 2 zu sehen. Die Kupplung 202 enthält eine Antriebsplatte 204 und ein elastisches Element 208. Die Antriebsplatte 204 ist mit einer Verbindungsplatte für die Antriebseinheit, oder Flexplatte 210 verbunden. Der Begrenzer 200 enthält auch einen geschlossenen Behälter 212, der die Dämpferanordnung 214 und ein Fluid (nicht gezeigt), wie Kühlungsöl umschliesst. Die Flexplatte 210 ist zur Verbindung mit einer Antriebseinheit (nicht gezeigt) ausgelegt, und um von und zu der Antriebseinheit Drehmoment zu übertragen. Die Kupplung 202 ist dazu angeordnet Drehmoment von der Antriebseinheit zu empfangen, und das Drehmoment auf die Dämpferanordnung zu übertragen.

Wie für die Kupplung 102 und den Begrenzer 100 beschrieben, ist die Kupplung 202 unabhängig vom Eingriff des Begrenzers 200 mit der Antriebseinheit vorgespannt, z.B. unabhängig von der Verbindung der Flexplatte 210 mit der Antriebseinheit, und dazu ausgelegt, bei einem spezifischen Drehmomentwert zu schlupfen. Das elastische Element 208 bringt die Vorspannung auf die Kupplung auf. Jedes in der Technik bekannte Mittel, z.B. eine Tellerfeder, kann als Element 208 verwendet werden. Das Element 208 ist mit dem Gehäuse 216 des Behälters durch ein beliebiges in der Technik bekanntes Mittel verbunden, z.B. durch extrudierte Nieten 218. Das Element 208 bringt die Last auf die Kupplung auf, als Reaktion auf die Verbindung mit dem Gehäuse, unabhängig von irgendeiner Verbindung des Begrenzers 200 mit einer Antriebseinheit. Anders ausgedrückt, eine Reaktionskraft zwischen dem elastischen Element und dem Behälter spannt die Kupplung vor. Damit ist die Anordnung 200 eine vorgespannte modulare Einheit, die keine weitere Bewegung von Teilen erfordert, um einen vorgespannten Zustand der Kupplung zu erreichen, was schliesslich den Einbau des Begrenzers 200 in eine Antriebseinheit besonders vereinfacht.

Die Befestigungsmittel 220 verbinden die Flexplatte mit der Antriebsplatte 204. In einigen Ausführungsformen sind die Befestigungsmittel Schrauben, obgleich festzuhalten ist, dass jegliche in der Technik bekannte Befestigungsmittel als Befestigungsmittel 220 verwendet werden können. Der Begrenzer 200 ist nicht auf irgendeine Anzahl von Befestigungsmitteln 220 beschränkt. In einigen Ausführungsformen werden vier bis sechs Befestigungsmittel verwendet. Dabei übertragen die Befestigungsmittel 220 das Drehmoment der Antriebseinheit von der Flexplatte auf die Antriebsplatten.

Die Kupplung 202 überträgt das Drehmoment der Antriebseinheit auf das Gehäuse 216, welches mit dem Dämpfer durch ein beliebiges in der Technik bekanntes Mittel, z.B. extrudierte Nieten 226, verbunden ist. Der Dämpfer ist zur drehfesten Verbindung mit der Eingangswelle 228 eines Getriebes (nicht gezeigt) durch beliebige in der Technik bekannte Mittel, z.B. Nabe 230 und Pumpennabe 232, verbunden. Damit ist ein Drehmomentpfad von der Antriebseinheit zu dem Getriebe über den Begrenzer 200 hergestellt. Der Drehmomentpfad enthält eine Drehmomentbegrenzung durch den Schlupf der Kupplung 202 und Dämpfung durch den Betrieb des Dämpfers 214.

In einigen Ausführungsformen wird Reibungsmaterial 234 axial zwischen der Antriebsplatte, dem Element 208, und/oder dem Gehäuse 216 angeordnet. Die Kupplung 202 ist nicht auf irgendeine Art oder Anordnung des Reibmaterials 234 beschränkt. In einigen Ausführungsformen werden Reibmaterialien fest an der Antriebsplatte, dem Element 208, und/oder dem Gehäuse 216 befestigt. In einigen Ausführungsformen werden Kupplungsplatten axial zwischen der Antriebsplatte, dem Element 208, und/oder dem Gehäuse 216 angebracht. In einigen Ausführungsformen wird kein Reibmaterial verwendet, oder ein Rostschutzmaterial, wie z.B. Fett, wird an der Antriebsplatte, dem Element 208, und/oder dem Gehäuse 216 angebracht.

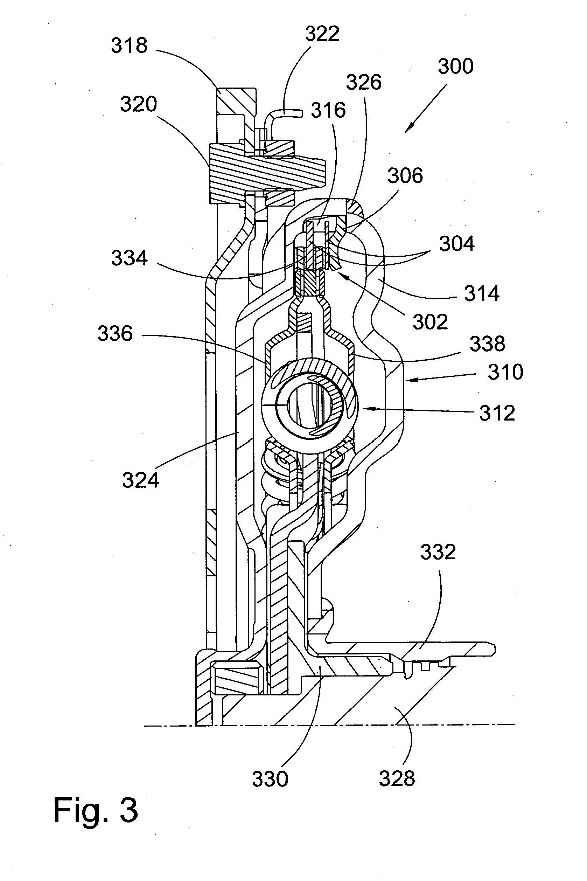

Fig. 3 ist eine teilweise Schnittansicht des Drehmomentbegrenzers 300 gemäss der Erfindung mit einer Nasskupplung 302. Die Kupplung 302 enthält Antriebsplatten 304 und ein elastisches Element 306. Obwohl zwei Antriebsplatten 304 in der Figur gezeigt sind, ist festzuhalten dass verschiedene Anzahlen von Antriebsplatten mit dem Begrenzer 300 verwendet werden können. Der Begrenzer 300 enthält auch einen Behälter 310, der eine Dämpferanordnung 312 und ein Fluid (nicht gezeigt), wie z.B. Kühlöl, einschliesst. Die Antriebsplatten 304 sind verschieblich mit dem Gehäuse 314 des Behälters durch freie Fortsätze 316 an dem Gehäuse und Nuten (nicht gezeigt) in den Antriebsplatten verbunden. Jedoch ist festzuhalten, dass jedes in der Technik bekannte Mittel verwendet kann, um die Antriebsplatten und das Gehäuse verschieblich zu verbinden. Verschieblicher Eingriff bedeutet, dass die Platten drehfest an dem Gehäuse befestigt sind, aber axial beweglich sind mit Bezug auf das Gehäuse, wie im Folgenden näher beschrieben.

Der Begrenzer 300 enthält auch eine Verbindungsplatte für die Antriebseinheit, oder eine Flexplatte 318, die dazu eingerichtet ist, um mit der Antriebseinheit (nicht gezeigt) zu verbinden, und von ihr Drehmoment zu übertragen. Obwohl eine spezielle Flexplattenanordnung in der Figur gezeigt wird, ist anzumerken, dass jegliche in der Technik bekannte Mittel verwendet werden können, um den Begrenzer 300 mit einer Antriebseinheit zu verbinden. Der Behälter 310 ist drehfest mit der Flexplatte verbunden. In einigen Ausführungsformen verbinden die Befestigungsmittel 320 die Antriebsplatte 322 mit der Flexplatte, und die Antriebsplatte 322 ist mit dem Gehäuse 324 des Behälters mit einer Kerbverzahnung verbunden. In einigen Ausführungsformen sind die Befestigungsmittel Schrauben, obwohl festzuhalten ist, dass jedes in der Technik bekannte Befestigungsmittel für die Befestigungsmittel 320 verwendet werden kann. Das Befestigungsmittel 300 ist nicht auf eine bestimmte Anzahl von Befestigungsmitteln 320 beschränkt. In einigen Ausführungsformen werden vier bis sechs Befestigungsmittel verwendet. Somit übertragen Befestigungsmittel 320 das Drehmoment der Antriebseinheit von der Flexplatte auf die Antriebsplatte 322. Alle in der Technik bekannten Mittel, z.B. Schweissen, können verwendet werden, um die Antriebsplatte 322 und das Gehäuse 324 drehfest zu verbinden. Das Gehäuse 324 ist mit dem Gehäuse 314 durch jegliche in der Technik bekannte Mittel verbunden, z.B. eine Schweissnaht 326, und ist dazu angeordnet, um Antriebsmoment auf das Gehäuse 314 zu übertragen. Die Kupplung 302 ist dazu angeordnet, um Drehmoment von dem Gehäuse 314 zu empfangen, und das Drehmoment auf die Dämpferanordnung zu übertragen.

Die Kupplung 302 ist unabhängig vom Eingriff des Begrenzers 300 mit der Antriebseinheit vorgespannt, z.B. unabhängig von der Verbindung der Flexplatte 318 mit der Antriebseinheit, und ist dazu ausgelegt, bei einem bestimmten Drehmomentwert zu schlupfen. Zum Beispiel rutscht die Kupplung 302, wenn Drehmomentspitzen von der Antriebseinheit den spezifizierten Wert überschreiten. Das elastische Element 306 bringt die Vorspannung auf die Kupplung auf. Alle in der Technik bekannten Mitteln, z.B. eine Telefeder, können als Element 306 verwendet werden. Das Element 306 bringt die Vorspannung auf die Kupplung als Reaktion auf die Verbindung mit dem Gehäuse 314 auf, unabhängig von einer Verbindung des Begrenzers 300 mit einer Antriebseinheit. Anders ausgedrückt, eine Reaktionskraft zwischen dem elastischen Element und dem Behälter spannt die Kupplung vor. Damit hat die Belastung der Kupplung mit dem Element 306 nichts mit der schliesslichen Verbindung der Anordnung mit einer Antriebseinheit zu tun, und ist davon unabhängig. Damit ist die Anordnung 300 eine vorgespannte modulare Einheit, die keine weitere Bewegung von Teilen erfordert, um einen vorgespannten Zustand der Kupplung zu erreichen, was den schliesslichen Einbau des Begrenzers 300 in einen Antriebsstrang wesentlich erleichtert.

In einigen Ausführungsformen wird die Kupplung 302 durch Aufstecken der Dämpferanordnung und von Antriebsplatten in dem Gehäuse 324 angeordnet, und dann durch Aufstecken des Elements 306 auf die Antriebsplatten. Das Gehäuse 314 wird dann so aufgesteckt, dass die Verlängerungen 316 mit den Antriebsplatten und dem elastischen Element zusammenwirken. Das Gehäuse 314 wird dann am Ort festgehalten und mit dem Gehäuse 324 verbunden, z.B. durch eine Schweissnaht 326. In einigen Ausführungsformen wird die Kupplung 302 durch Aufstecken der Dämpferanordnung, der Antriebsplatten, und des elastischen Elements auf das Gehäuse 314 und Fortsätze 316 montiert. Dann wird das Gehäuse 314 auf das Gehäuse 324 aufgesteckt, und die Gehäuse werden zusammengehalten und verbunden, z.B. durch eine Schweissnaht 326. Damit bringt das Stapeln des Gehäuses axiale Kräfte auf das Element 306 auf, und das Element reagiert gegen das Gehäuse, um die Vorspannungskraft auf die Kupplung 302 aufzubringen.

Der Dämpfer 312 ist zur drehfesten Verbindung mit der Eingangswelle 328 eines Getriebes (nicht gezeigt) durch in der Technik bekannte Mittel, z.B. die Nabe 330 und die Pumpennabe 332, ausgelegt. Damit wird ein Drehmomentpfad von der Antriebseinheit an das Getriebe durch den Begrenzer 300 aufgebaut. Der Drehmomentpfad enthält eine Drehmomentbegrenzung durch den Schlupf der Kupplung 302 und Dämpfung durch den Betrieb des Dämpfers 312.

In einigen Ausführungsformen wird Reibmaterial 334 zwischen den Antriebsplatten 336 und 338 und/oder dem Element 306 angeordnet. Die Kupplung 302 ist nicht auf irgendeine Art oder Konfiguration von Reibmaterialien beschränkt. Die Kupplung 302 ist nicht auf irgendeine Anzahl von Platten 336 oder 338 beschränkt. In einigen Ausführungsformen werden Reibmaterialien fest an den Antriebsplatten, den Platten 336 und 338, und/oder dem Element 306 angebracht. In einigen Ausführungsformen sind Kupplungsplatten axial zwischen den Antriebsplatten, den Platten 336 und 338, und/oder dem Element 306 angeordnet. In einigen Ausführungsformen wird kein Reibmaterial verwendet, oder ein Rostschutzmaterial, wie z.B. Fett, wird auf die Antriebsplatten, die Platten 336 und 338, und/oder das Element 306 aufgetragen.

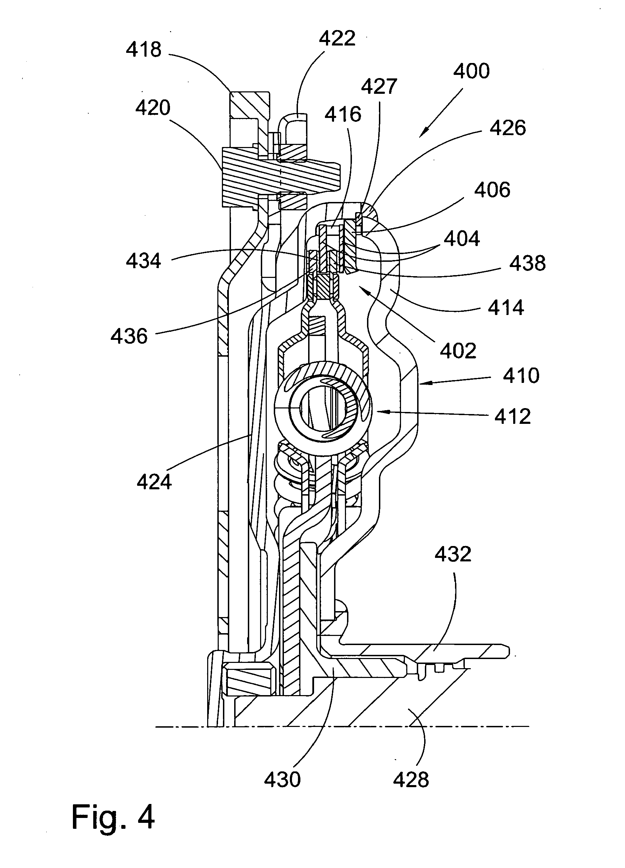

Fig. 4 ist eine teilweise Schnittansicht des Drehmomentbegrenzers 400 gemäss der vorliegenden Erfindung mit einer Nasskupplung 402. Die Kupplung 402 enthält Antriebsplatten 404 und ein elastisches Element 406. Obwohl zwei Antriebsplatten 404 in der Figur gezeigt werden, ist festzuhalten, dass andere Anzahlen von Antriebsplatten mit dem Begrenzer 400 verwendet werden können. Der Begrenzer 400 enthält auch einen abgeschlossenen Behälter 410, der eine Dämpferanordnung 412, und ein Fluid (nicht gezeigt), wie z.B. Kühlöl einschliesst. Die Antriebsplatten 404 sind gleitend mit dem Gehäuse 414 des Behälters durch komplementäre Fortsätze 416 an dem Gehäuse und Nuten in den Antriebsplatten verbunden. Jedoch, ist festzuhalten, dass alle in der Technik bekannten Mittel verwendet werden können, um die Antriebsplatten und das Gehäuse verschieblich zu verbinden.

Der Begrenzer 400 enthält auch eine Verbindungsplatte zur Antriebseinheit, oder eine Flexplatte 418, die dazu angeordnet ist, Drehmoment zu und von der Antriebseinheit (nicht gezeigt) zu übertragen. Obwohl eine spezielle Flexplattenanordnung in der Figur gezeigt ist, ist festzuhalten, dass jedes in der Technik bekannte Mittel verwendet werden kann, um den Begrenzer 400 mit einer Antriebseinheit zu verbinden. Der Behälter 410 ist drehfest mit der Flexplatte verbunden. In einigen Ausführungsformen verbinden die Befestigungsmittel 420 die Antriebsplatte 422 mit der Flexplatte, und die Antriebsplatte 422 ist mit dem Gehäuse 424 des Behälters mit einer Keilverzahnung verbunden. In einigen Ausführungsformen sind die Befestigungsmittel Schrauben, obwohl festzuhalten ist, dass jedes in der Technik bekannte Befestigungsmittel als Befestigungsmittel 420 verwendet werden kann. Der Begrenzer 400 ist nicht auf eine bestimmte Anzahl von Befestigungsmitteln 420 beschränkt. In einigen Ausführungsformen werden vier bis sechs Befestigungsmittel verwendet. Damit übertragen die Befestigungsmittel 420 das Antriebsdrehmoment von der Flexplatte zu der Antriebsplatte 422. Jegliche in der Technik bekannte Mittel, z.B. Schweissen, können verwendet werden, um die Antriebsplatte 422 und das Gehäuse 424 drehfest zu verbinden. Das Gehäuse 424 ist mit dem Gehäuse 414 durch beliebige in der Technik bekannte Mittel, z.B. eine Schweissnaht 426, verbunden, und ist dazu eingerichtet, Drehmoment von der Antriebseinheit auf das Gehäuse 414 zu übertragen. Die Kupplung 402 ist dazu eingerichtet, Drehmoment von dem Gehäuse 414 zu empfangen, und das Drehmoment auf die Dämpferanordnung zu übertragen.

Die Kupplung 402 ist unabhängig von dem Eingriff des Begrenzers 400 in die Antriebseinheit vorgespannt, z.B. unabhängig von der Verbindung der Flexplatte 418 mit der Antriebseinheit, und ist dazu eingerichtet bei einem bestimmten Drehmomentwert zu schlupfen. Zum Beispiel schlupft die Kupplung 402 wenn Drehmomentspitzen von der Antriebseinheit über den spezifizierten Wert hinausgehen. Das elastische Element 406 bringt die Vorspannung auf die Kupplung auf. Alle in der Technik bekannten Mittel, z.B. eine Tellerfeder, können als Element 406 verwendet werden. Das Element 406 bringt die Last auf die Kupplung als Reaktion auf die Verbindung mit dem Gehäuse auf, unabhängig von einer Verbindung des Begrenzers 400 mit einer Antriebseinheit. Anders ausgedrückt, eine Reaktionskraft zwischen dem elastischen Element und dem Behälter spannt die Kupplung vor. Daher hat die Vorspannung der Kupplung durch das Element 406 nichts mit der schliesslichen Verbindung der Anordnung mit einer Antriebseinheit zu tun, und ist davon unabhängig. Damit ist die Anordnung 400 eine vorgespannte modulare Einheit, die keine weitere Bewegung von Teilen erfordert, um einen vorgespannten Zustand für die Kupplung zu erreichen, was den schliesslichen Einbau des Begrenzers 400 in einen Antriebsstrang sehr erleichtert.

Die Kupplung 400 wird dadurch zusammengebaut, dass die Dämpferanordnung und die Antriebsplatten in dem Gehäuse 424 aufeinander gesteckt werden, und das Element 406 auf die Antriebsplatten gesteckt wird. Der Sicherungsring 427 wird dann in das Gehäuse 424 eingefügt, wobei er Axialkraft auf das Element 406 aufbringt. Das Element wirkt gegen den Sicherungsring, um die Vorspannungskraft auf die Kupplung 402 aufzubringen. Das Gehäuse 414 wird dann mit dem Gehäuse 424 verbunden, z.B. durch die Schweissnaht 426.

Der Dämpfer 412 ist für eine drehfeste Verbindung mit der Antriebswelle 428 eines Getriebes (nicht gezeigt) durch beliebige in der Technik bekannte Mittel, z.B. eine Nabe 30 und eine Pumpennabe 432, ausgelegt. Damit wird ein Drehmomentpfad von der Antriebseinheit zu dem Getriebe durch den Begrenzer 400 hergestellt. Der Drehmomentpfad enthält eine Drehmomentbegrenzung durch den Schlupf der Kupplung 402 und Dämpfung durch den Betrieb des Dämpfers 412.

In einigen Ausführungsformen ist Reibmaterial zwischen den Antriebsplatten 436 und 438 und/oder dem Element 406 angeordnet. Die Kupplung 402 ist auf keine bestimmte Art oder Anordnung von Reibmaterialien 434 begrenzt. Die Kupplung 402 ist auf keine Anzahl von Platten.436 oder 438 beschränkt. In einigen Ausführungsformen sind Reibmaterialien fest mit den Antriebsplatten, Platten 436 und 438, und/oder dem Element 406 verbunden. In einigen Ausführungsformen sind Kupplungsplatten axial zwischen den Antriebsplatten, den Platten 436 und 438, und/oder dem Element 406 verbunden. In einigen Ausführungsformen wird kein Reibmaterial verwendet, oder Rostschutzmaterial, wie z.B. Fett, wird auf die Antriebsplatten, die Platen 436 und 438, und/oder das Element 406 aufgebracht.

Damit ist ersichtlich, dass die Ziele der vorliegenden Erfindung wirksam erreicht werden, obwohl Modifikationen und Änderungen für Fachleute leicht ersichtlich sind, wobei diese Modifikationen innerhalb des beanspruchten Schutzumfangs enthalten sind. Es ist auch festzuhalten, dass die vorgehende Beschreibung zur Darstellung der vorliegenden Erfindung dient, und nicht als Einschränkung angesehen werden soll. Daher sind andere Ausführungsformen der vorliegenden Erfindung möglich, ohne über den Schutzumfang der vorliegenden Erfindung hinauszugehen.

## Patentansprüche

1. Drehmomentbegrenzer, aufweisend:
einen abgeschlossenen Behälter mit einer Dämpferanordnung; und
eine Kupplung, welche dazu eingerichtet ist Drehmoment von einer Antriebseinheit aufzunehmen, und das Drehmoment auf die Dämpferanordnung zu übertragen, wobei die Kupplung unabhängig vom Eingriff des Begrenzers mit der Antriebseinheit vorgespannt ist, und die Kupplung dazu eingerichtet ist, bei einem festgesetzten Drehmomentwert zu schlupfen.

2. Begrenzer nach Anspruch 1, **dadurch gekennzeichnet dass**, die Kupplung weiterhin ein elastisches Element aufweist, welches dazu eingerichtet ist, die Kupplung vorzuspannen, so dass die Kupplung bis zu dem spezifizierten Drehmomentwert voll im Eingriff bleibt.

3. Begrenzer nach Anspruch 2, weiterhin aufweisend eine Verbindungsplatte für die Antriebseinheit, die zur Verbindung mit der Antriebseinheit eingerichtet ist, und **dadurch gekennzeichnet, dass** die Kupplung zwischen der Verbindungsplatte für die Antriebseinheit und dem Behälter angeordnet ist.

4. Begrenzer nach Anspruch 1, **dadurch gekennzeichnet, dass** die Kupplung eine Trockenkupplung ist.

5. Begrenzer nach Anspruch 3, **dadurch gekennzeichnet, dass** der Behälter ein Gehäuse aufweist, die Kupplung mit dem Gehäuse verbunden ist, und das Gehäuse dazu eingerichtet ist, das Drehmoment der Antriebseinheit auf das Gehäuse zu übertragen.

6. Begrenzer nach Anspruch 5, **dadurch gekennzeichnet, dass** das elastische Element an dem Gehäuse befestigt ist.

7. Begrenzer nach Anspruch 2, weiterhin umfassend, eine Verbindungsplatte für die Antriebseinheit, die dazu eingerichtet ist, mit der Antriebseinheit zu verbinden, und wobei der Behälter ein erstes Gehäuse umfasst, das mit der Verbindungsplatte für die Antriebseinheit verbunden ist, und die Kupplung zwischen dem ersten Gehäuse und der Dämpferanordnung angeordnet ist.

8. Begrenzer nach Anspruch 7, **dadurch gekennzeichnet, dass** das abgeschlossenen Gehäuse ein Fluid einschliesst.

9. Begrenzer nach Anspruch 7, **dadurch gekennzeichnet, dass** der Behälter ein zweites Gehäuse aufweist, und das elastische Element verschieblich mit dem zweiten Gehäuse verbunden ist.

10. Begrenzer nach Anspruch 9, **dadurch gekennzeichnet, dass** das zweite Gehäuse mit dem elastischen Element in Berührung ist, und das elastische Element die Kupplung als Reaktion auf die Berührung vorspannt.

11. Begrenzer nach Anspruch 7, weiterhin umfassend, einen Sicherungsring, der sich in Eingriff mit dem zweiten Gehäuse befindet, und der das elastische Element berührt, und das elastische Element als Reaktion auf die Berührung die Kupplung vorspannt.

12. Drehmomentbegrenzer, aufweisend:
eine Verbindungsplatte für die Antriebseinheit, die zur Verbindung mit einer Antriebseinheit eingerichtet ist, und zum Übertragen von Drehmoment von der Antriebseinheit;
einen abgeschlossenen Behälter mit einer Dämpferanordnung; und
eine Kupplung in einem Drehmomentübertragungspfad zwischen der Verbindungsplatte für die Antriebseinheit und dem Dämpfer, **dadurch gekennzeichnet, dass** die Reaktionskraft zwischen dem elastischen Element in der Kupplung und dem Behälter die Kupplung vorspannt, und die Kupplung dazu eingerichtet ist, bei einem festgesetzten Drehmomentwert zu schlupfen.

13. Begrenzer nach Anspruch 12, **dadurch gekennzeichnet, dass** die Kupplung zwischen der Verbindungsplatte für die Antriebseinheit und dem abgedichteten Behälter angeordnet ist.

14. Begrenzer nach Anspruch 12, **dadurch gekennzeichnet, dass** der Behälter weiterhin ein Gehäuse aufweist, und die Kupplung zwischen dem Gehäuse und der Dämpferanordnung angeordnet ist.

15. Verfahren zur Montage eines Drehmomentbegrenzers, welches die Schritte aufweist:
Aufstecken eines elastischen Elements auf einen ersten Abschnitt des Dämpfergehäuses;
Aufstecken einer Anordnung aus Kupplung und Dämpfer auf das elastische Element; und
in Eingriff bringen des ersten Abschnitts mit dem zweiten Abschnitt des Dämpfergehäuses, so dass das elastische Element die Kupplung vorspannt, und die Kupplung bei einem bestimmten Drehmomentwert schlupft.

16. Verfahren nach Anspruch 15, weiterhin aufweisend Verschweissen der ersten und zweiten Abschnitte, um das Gehäuse abzudichten.

17. Verfahren zur Montage eines Drehmomentbegrenzers, welches die Schritte aufweist:
Aufstecken einer Anordnung aus Kupplung und Dämpfer auf einen ersten Abschnitt eines Dämpfergehäuses;
Aufstecken eines elastischen Elements auf diese Anordnung aus Kupplung und Dämpfer; und
axiales Festlegen des elastischen Elements an dem ersten Abschnitt, so dass das elastische Element die Kupplung vorspannt, und die Kupplung bei einem spezifizierten Drehmoment schlupft.

18. Verfahren nach Anspruch 17, weiterhin aufweisend:
in Eingriff bringen des ersten Abschnitts mit dem zweiten Abschnitt des Dämpfergehäuses; und
Verschweissen der ersten und zweiten Abschnitte um den Behälter abzudichten.

19. Verfahren nach Anspruch 17, **dadurch gekennzeichnet, dass** das axiale Festlegen des elastischen Elements an dem ersten Abschnitt weiterhin das in Eingriff bringen eines Sicherungsrings mit dem ersten Abschnitt und dem elastischen Element aufweist.
